Europäisches Patentamt

(19) European Patent Office

Office européen des brevets

(11) Publication number: **0 160 348**

A2

(12) # EUROPEAN PATENT APPLICATION

(21) Application number: **85200679.0**

(22) Date of filing: **01.05.85**

(51) Int. Cl.⁴: **A 01 B 49/06**

(30) Priority: **01.05.84 DK 1506/84**

(43) Date of publication of application:
**06.11.85 Bulletin 85/45**

(84) Designated Contracting States:
**AT BE CH DE FR GB IT LI NL SE**

(71) Applicant: **O.G. Kverneland-Fraugde A/S**

**DK-5220 Odense SÖ(DK)**

(72) Inventor: **Skött-Christensen, Arne**
**"Stensgaard" Helnäsbyvej 71**
**DK-5631 Ebberup(DK)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) An agricultural soil preparation implement.

(57) For successively preparing the sowing bed in front of a sowing machine there is mounted, in front of the sowing machine, a harrow-like implement having stiff teeth, the lower ends of which are provided with rearwardly and laterally projecting scraper blades, which are slightly screw twisted rearwardly. These scraper blades act to plane off and laterally displace the surface layer of the ground, whereby the earth in this layer is effectively loosened. The implement is carried by a grid drum. The scraper blades behind consecutive rows of teeth are laterally inclined to mutually opposite sides, whereby the earth as displaced firstly in one lateral direction will get displaced back again into its original position, without any significant resulting displacement. The stiff teeth may have a lower free end portion drawing draining grooves in the bottom of the sowing bed as prepared by the scraper blades. The implement will effectively prepare the sowing bed solely by the general propulsion of the implement, i.e. without separate powering of individually movable working tools.

Fig 1

Title: An Agricultural Soil Preparation Implement.

The present invention relates to an agricultural implement mainly for use in combination with other implements such as harrows and sowing machines for conditioning the field surface in front of the other implement, primarily for preparation of a sowing bed in front of a sowing machine.

It is known in the art to make use, for this purpose, of a power driven rotary cultivator, but it is the purpose of the invention to provide an implement which is effective for loosening the surface earth without any need of separately powered working tools.

The implement according to the invention is mainly characterized by comprising at least two transverse holding beam portions arranged one after the other and each carrying a plurality of downwardly projecting blade members extending generally in the longitudinal moving direction of the implement, but with their lower edges forming, in the horizontal plane, an angle of $10\text{-}30^\circ$, preferably about $15^\circ$, with the moving direction to mutually opposite sides thereof for the blades as carried by the respective holding beam portions. The said blade members will act to push the surface earth laterally of the moving direction of the implement, first to one side and then to the other side, i.e. the earth will get broken and conditioned already by the general movement of the blades without any or any substantial resulting lateral displacement of the earth.

A particularly advantageous effect is obtained when the blades have a twisted shape such that from a vertical front edge they are increasingly laterally inclined towards their rear edge so as to cause the engaged earth to be lifted somewhat, whereby the earth breaking capacity of the blades is increased.

In the following the invention is described in more detail with reference to the drawing, in which

Fig. 1 is a perspective view of a sowing machine as connected with a front mounted implement according to the invention,

Fig. 2 is a partial front view of the assembly of Fig. 1, and

Fig. 3 is a perspective top view of one end of the implement.

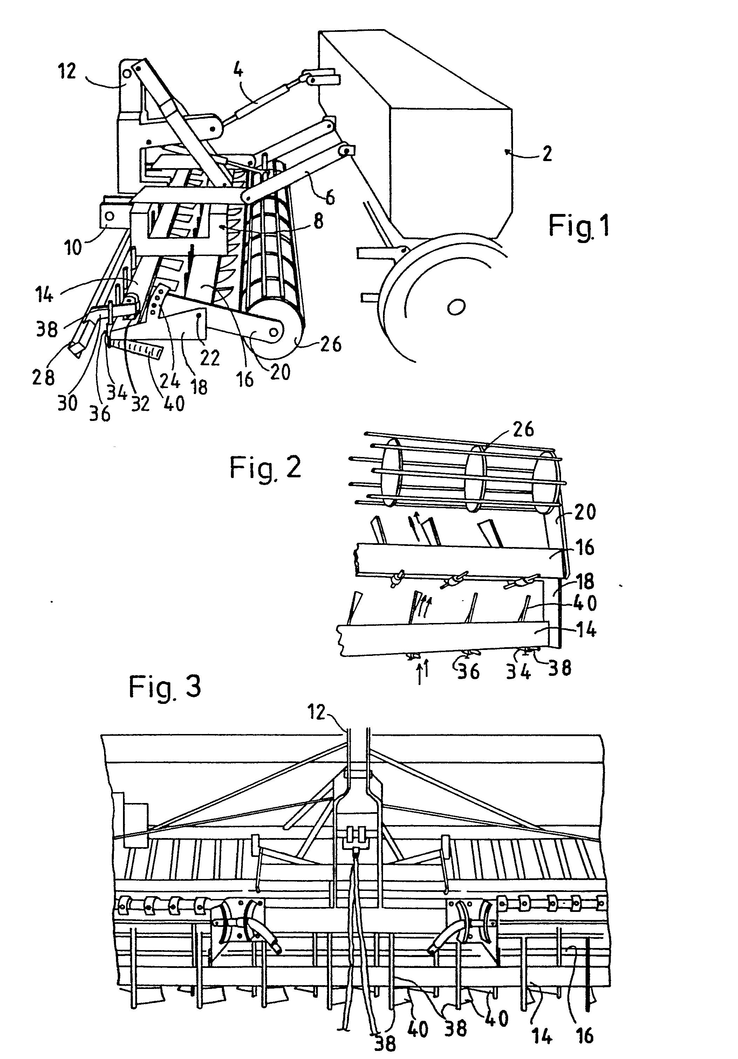

In Fig. 1 is shown a conventional sowing machine 2 having a three point suspension arrangement which is coupled to a front mounted implement through a top rod 4 and two lower connection arms 6, the said implement comprising a carrier chassis 8 which is, itself, provided with suspension members 10 and 12 for connection with a conventional three point lift of a tractor. The chassis 8 carries a transverse front boom 14 and a corresponding rear boom 16, these booms at each side of the implement being interconnected by a plate member 18, to which is secured a rearwardly projecting bracket plate 20, which is vertically pivotal about a pivot pin 22 and fixable to a locking plate portion 24. Between the outer ends of the bracket plates 20 is mounted a grid drum 26, which will serve to hold the booms 14 and 16 in a desired height above the ground. At the front of the implement is arranged a levelling plank 28 as held in a height adjustable manner by carrier arms 30 and rigid carrier posts 32 on the front boom 14.

Adjacent the front edge of each transverse boom 14 and 16 is mounted a row of vertically oriented tooth holders 34 each provided with a clamp screw 36 for holding a stiff, vertical tooth 38. Underneath the booms each of these teeth 38 is provided with an obliquely rearwardly and laterally projecting scraper blade 40, which, from its vertical front edge, is twisted rearwardly such that the lower edge of each scraper blade is inclined laterally more than the top edge thereof, the lateral inclination of the lower edges preferably amounting to some 15$^{\circ}$ with

the moving direction of the implement. The lower edges of the scraper blades 40 project rearwardly substantially in the horizontal plane, and the scraper blades 40 associated with the respective two booms 14 and 16 are laterally inclined to mutually opposite sides.

The scraper blades 40 associated with the respective two booms 14 and 16 are mounted transversely staggered such that the blades of the rear row of scraper blades will at least approximately fill out the space behind and between the scraper blades of the leading row of these blades (see Figs. 2 and 3) such that at least the majority of the treated surface earth will be subjected to the lateral scraper effect of the oblique scraper blades 40.

As shown by arrows in Fig. 3 the surface earth will hereby be displaced laterally to one side by the front blades 40 and thereafter be displaced to the opposite side by the rear blades 40, i.e. the earth layer will not be subjected to any significant resulting displacement.

Because of their lateral inclination and their twisted shape the scraper blades will act as small shovel or plough blades which act to both displace and lift the surface earth layer, which is thereby subjected to an effective breaking and crackling, as highly desired for the conditioning of a sowing bed. However, the treatment will be advantageous also when the afterrunning implement is another soil preparation implement such as a harrow.

The stiff vertical teeth 38 preferably project downwardly beyond the lower edges of the scraper blades 40, whereby the lower ends of the teeth will produce bottom grooves in the bed as left by the scraper blades, and such grooves may be active as drain grooves.

The levelling plank 28 will serve to smoothen the soil in front of the scraper blade system, and the carrier drum 26 will contribute to the desired working of the soil surface by breaking earth clods and by pressing the loosened surface earth locally against the underlying ground.

The lower edges of the scraper blades 40 should project rearwardly and laterally in a direction as close as possible to a horizontal direction or rather a direction in a plane parallel with the treated soil surface, such that the scraper blades will produce a planing action on the earth.

The associated planing level should be located with a well defined spacing underneath the top level of the ground as supporting the driving wheels of the sowing machine, such that the sowing bed is prepared down to a desired, well defined depth. It should be possible, therefore, to effect an adjustment of the direction and the height position of the implement relative the tractor and the sowing machine, and the chassis 8 is preferably provided with correspondingly adjustable connector means, which, however, will not be described in more detail, as they are unimportant for the understanding of the primary invention.

C L A I M S :

1.    An agricultural implement for use in combination with other implement means in order to condition the field surface in front of the other implement means, characterized by comprising at least two transverse holding beam portions arranged one after the other and each carrying a plurality of downwardly projecting blade members extending generally in the longitudinal moving direction of the implement, but with their lower edges forming, in the horizontal plane, an angle of 10-30$^{\circ}$, preferably about 15$^{\circ}$, with the moving direction to mutually opposite sides thereof for the blades as carried by the respective holding beam portions.

2.    An implement according to claim 1, in which each of said blade members is screw twisted such that its rearwardly projecting top edge forms a horizontal angle with the moving direction which is smaller than the corresponding angle of the lower edge of the blade member.

3.    An implement according to claim 1 or 2, in which the holding beam portions are connected with a frame as effectively supported by a ground engaging member of an open structure.

4.    An implement according to claim 3, in which the height position of the holding beam portions is adjustable relative the height position of the drum member.

5.    An implement according to claim 1, in which the single blade members are mounted frontendwise on a stiff tooth member projecting downwardly from the respective holding beam portion.

6.    An implement according to claim 5, in which the tooth members are height adjustably connected with the respective holding beam portion.

7.   An implement according to claim 5, in which the tooth members project downwardly beyond the lower edges of the blade members.

8.   An implement according to claim 1, in which the holding beam portions are connected with a chassis which is prepared for three-point connection with the lift system of a conventional agricultural tractor and is additionally prepared for connection with an afterrunning implement such as a harrow or a sowing machine as otherwise adapted for direct three-point connection with said lift system.

9.   An implement according to claim 1, in which there is arranged, in front of the leading transverse holding beam portion, a transverse drag beam for smoothening the ground surface ahead of the inclined blade members.

10.   An implement according to claim 8, in which the chassis of the holding beam portions include means for adjusting the mutual positions of the implement relative the tractor and the afterrunning implement.

0160348

Fig. 1

Fig. 2

Fig. 3